# FASCICULE DE BREVET EUROPEEN

(11) **EP 4 648 975 B1**
(45) Date de publication et mention de la délivrance du brevet: **07.10.2026**
(21) Numéro de dépôt: 23805984.4
(22) Date de dépôt: 16.11.2023
(51) Int. Cl.: B60C 9/04, B60C 9/08, B60C 15/00, B60C 15/04, B60C 15/06

(54) **PNEUMATIQUE À INTERFACE AMÉLIORÉE**
REIFEN MIT VERBESSERTER SCHNITTSTELLE
TYRE WITH AN IMPROVED INTERFACE

(30) Priorité: 11.01.2023 FR 2300255
(43) Date de publication de la demande: 19.11.2025
(73) Titulaire: COMPAGNIE GENERALE DES ETABLISSEMENTS MICHELIN, 63000 Clermont-Ferrand (FR)
(72) Inventeur: SCHMITT, Sabrina, 63040 CLERMONT-FERRAND CEDEX 09 (FR); BONNET, Aymeric, 63040 CLERMONT-FERRAND CEDEX 09 (FR)
(74) Mandataire: M.F.P. Michelin
(86) Numéro de dépôt international: PCT/EP2023/082017
(87) Numéro de publication internationale: WO 2024/149494

(56) Documents cités:
- FR-A1- 2 940 187
- FR-A1- 3 050 962
- FR-A1- 3 094 672
- FR-A1- 3 122 610

## Description

La présente invention concerne un pneumatique. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale de révolution autour d'un axe principal du pneumatique.

On connait de l'état de la technique un pneumatique pour véhicule de tourisme comprenant un sommet, deux bourrelets, deux flancs reliant chaque bourrelet au sommet. Le pneumatique comprend également une armature de carcasse comprenant une ou plusieurs couches de carcasse ancrée(s) dans chaque bourrelet. Le sommet comprend une armature de sommet, la ou chaque couche de carcasse s'étendant radialement dans chaque flanc et axialement dans le sommet radialement intérieurement à l'armature de sommet. La ou chaque couche de carcasse comprend des éléments de renfort noyés dans une matrice polymérique.

Le pneumatique comprend également des couches de rigidification s'étendant radialement depuis chaque bourrelet jusque dans chaque flanc adjacent audit bourrelet. Dans chaque flanc adjacent, la couche de rigidification est agencée axialement entre la couche de carcasse axialement la plus extérieure et la couche externe du flanc portant la surface externe du flanc. Dans chaque flanc, la couche de rigidification est agencée au contact d'une partie de la couche de carcasse axialement la plus extérieure dans chaque flanc et au contact d'une partie de la couche externe de chaque flanc. Un tel pneumatique est par exemple divulgué dans le document FR3122610 A.

On a observé, en particulier dans des conditions d'utilisation anormalement sollicitantes, notamment dans des conditions de charge élevée et/ou de pression inférieure à la pression recommandée, une augmentation importante de la dissipation d'énergie et une élévation de température à l'interface entre la couche de rigidification et la couche de carcasse axialement la plus extérieure.

L'invention a pour but de maitriser la dissipation d'énergie et l'élévation de la température entre la couche de rigidification et la couche de carcasse axialement la plus extérieure, en particulier dans des conditions d'utilisation anormalement sollicitantes.

A cet effet, l'invention a pour objet un pneumatique pour véhicule de tourisme comprenant :
- un sommet, deux bourrelets, deux flancs reliant chaque bourrelet au sommet, chaque flanc comprenant une couche externe dudit flanc portant une surface externe dudit flanc,
- une couche renforcée s'étendant radialement dans au moins un des flancs et comprenant des éléments de renfort filaires noyés dans une matrice polymérique,
- une couche de rigidification s'étendant radialement depuis un des bourrelets jusque dans le flanc adjacent audit bourrelet, la couche de rigidification étant agencée, dans ledit flanc:
   - axialement entre la couche renforcée et la couche externe dudit flanc, et
   - au contact d'au moins une partie de la couche renforcée et au contact d'au moins une partie de la couche externe dudit flanc,
   le rapport R du module MA100R à 100% d'allongement de la matrice polymérique de la couche renforcée sur le module MA10B à 10% d'allongement de la couche de rigidification est tel que R x 1000 ≥ (0,011 x MA10B x MA10B) - 1,71 x MA10B + 86,70.

Le pneumatique selon l'invention présente une dissipation d'énergie et une élévation de la température relativement faible et ce même dans des conditions d'utilisation anormalement sollicitantes. En effet, les inventeurs ont découvert qu'en limitant la différence entre d'une part le module du point de fonctionnement de la matrice polymérique de la couche renforcée et d'autre part le module du point de fonctionnement de la couche de rigidification, on limitait la différence des contraintes à l'interface entre la matrice polymérique de la couche renforcée et la couche de rigidification. Or, le point de fonctionnement de la matrice polymérique de la couche renforcée se situe à des allongements relativement élevés alors que le point de fonctionnement de la couche de rigidification se situe à des allongements relativement faibles. Les modules respectivement à 100% et à 10% d'allongement sont ainsi représentatifs des points de fonctionnement de la couche renforcée et de la couche de rigidification. Ainsi, les inventeurs à l'origine de l'invention ont déterminé que le rapport R était représentatif de la sensibilité de l'interface entre la matrice polymérique de la couche renforcée et la couche de rigidification. Pour une valeur du module MA10B donnée, plus le rapport est élevé, moins l'interface est sensible.

Pour expliquer cela, les inventeurs font l'hypothèse qu'en augmentant, pour une valeur du module MA10B donnée, la valeur du rapport R, on limite la différence de contraintes à l'interface générant la dissipation d'énergie et l'élévation de température.

La couche de rigidification s'étend radialement depuis un des bourrelets jusque dans le flanc adjacent audit bourrelet. Ainsi, la couche de rigidification est présente en partie dans le flanc et en partie dans le bourrelet, les proportions d'une des parties par rapport à l'autre variant suivant le pneumatique considéré et les performances que l'homme du métier souhaite conférer au pneumatique.

La couche de rigidification ne délimite pas la surface externe dudit flanc.

La surface externe est la surface du pneumatique en contact avec l'air à pression atmosphérique et visible depuis l'extérieur du pneumatique.

Concernant le module MA10B à 10% d'extension, il s'agit du module élastique du mélange mesuré lors d'une expérience de traction uniaxiale, à une valeur d'allongement de 0.1 (soit 10% d'allongement, exprimé en pourcentage). On impose une vitesse constante de traction uniaxiale à l'éprouvette, et on mesure son allongement et l'effort. La mesure est réalisée à l'aide d'une machine de traction de type INSTRON, à une température de 23°C, et une humidité relative de 50% (Norme ISO 23529). Les conditions de mesure et d'exploitation des résultats pour déterminer l'allongement et la contrainte sont telles que décrites dans la norme NF ISO 37: 2012-03. On détermine la contrainte pour un allongement de 0.1 et on calcule le module d'élasticité sous tension à 10 % d'allongement en faisant le rapport de cette valeur de contrainte sur la valeur d'allongement. L'homme du métier saura choisir et adapter les dimensions de l'éprouvette en fonction de la quantité de mélange accessible et disponible en particulier dans le cas de prélèvements d'éprouvette dans le pneumatique. Le module MA100R est déterminé de la même manière *mutatis mutandis.*

Lorsqu'il est possible de déterminer les modules MA10B et MA100R sur le pneumatique, les modules MA10B et MA100R sont mesurés sur la matrice polymérique et la couche de rigidification délimitant l'interface entre la couche renforcée et la couche de rigidification située dans le flanc.

Préférentiellement, la matrice polymérique est une matrice élastomérique.

Préférentiellement, contrairement à la couche renforcée, la couche de rigidification ne comprend pas d'élément de renfort filaires noyés dans la couche de rigidification. Ainsi, préférentiellement, la couche de rigidification est constituée d'un mélange polymérique, de préférence d'un mélange élastomérique. De tels mélanges de rigidification sont notamment connues de EP0678404, WO2010072736.

Par élément de renfort filaire, on entend un élément permettant le renforcement mécanique de la matrice polymérique dans laquelle cet élément de renfort filaire est destiné à être noyé. Chaque élément de renfort est filaire, c'est-à-dire que l'élément présente une longueur au moins 10 fois plus grande que la plus grande dimension de sa section quelle que soit la forme de cette dernière : circulaire, elliptique, oblongue, polygonale, notamment rectangulaire ou carrée ou ovale. Dans le cas d'une section rectangulaire, l'élément de renfort filaire présente la forme d'une bande.

La matrice est dite polymérique ou le mélange est dit polymérique car à base d'une composition polymérique, cette composition polymérique pouvant comprendre un ou plusieurs polymères, par exemple choisis parmi les polymères thermoplastiques, les polymères thermodurcissables, les élastomères, les élastomères thermoplastiques, mais également des charges et d'autres composants habituellement utilisés dans le domaine des compositions pour pneumatiques, notamment des compositions pour le noyage d'éléments de renfort filaires ou pour les couches de rigidification.

Par flanc adjacent à un bourrelet, on entend le flanc agencé du même côté du plan médian du pneumatique que le côté duquel se trouve le bourrelet.

Le pneumatique selon l'invention présente une forme sensiblement torique autour d'un axe de révolution sensiblement confondu avec l'axe de rotation du pneumatique. Cet axe de révolution définit trois directions classiquement utilisées par l'homme du métier : une direction axiale, une direction circonférentielle et une direction radiale.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par surface circonférentielle équatoriale du pneumatique, on entend l'association des plans passant, dans chaque plan de coupe méridien, par l'équateur (noté E) du pneumatique et perpendiculaire au plan médian et à la direction radiale. L'équateur du pneumatique est, dans chaque plan de coupe méridien (plan perpendiculaire à la direction circonférentielle et parallèle aux directions radiale et axiales) l'axe parallèle à l'axe de rotation du pneumatique et situé à équidistance entre le point radialement le plus extérieur de la bande de roulement destiné à être au contact avec le sol et le point radialement le plus intérieur du pneumatique destiné à être en contact avec un support, par exemple une jante.

Par plan méridien, on entend un plan parallèle à et contenant l'axe de rotation du pneumatique et perpendiculaire à la direction circonférentielle.

Par radialement intérieur, respectivement radialement extérieur, on entend plus proche de l'axe de rotation du pneumatique, respectivement plus éloigné de l'axe de rotation du pneumatique. Par axialement intérieur, respectivement axialement extérieur, on entend plus proche du plan médian du pneumatique, respectivement plus éloigné du plan médian du pneumatique.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage. L'extrémité radialement extérieure de la surface externe du bourrelet du pneumatique est définie comme le point de la surface externe du pneumatique radialement le plus extérieur en contact avec une jante de mesure du pneumatique selon le manuel de la norme ETRTO, 2021 lorsque le pneumatique est gonflé à sa pression nominale sur cette jante de mesure. Le bourrelet et le flanc sont alors délimités par une droite perpendiculaire à la surface externe du pneumatique en ce point.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques sont destinés à des véhicules de tourisme tels que définis au sens du manuel de la norme ETRTO, 2021. Un tel pneumatique présente une section dans un plan de coupe méridien caractérisée par une hauteur de section H et une largeur de section nominale ou grosseur boudin SW au sens du manuel de la norme ETRTO, 2021 telles que, optionnellement, le rapport H/SW, exprimé en pourcentage, est au plus égal à 90 et est au moins égal à 20, et la largeur de section nominale SW est au moins égale à 185 mm et au plus égal à 385 mm. En outre, le diamètre au crochet D, définissant le diamètre de la jante de montage du pneumatique, est optionnellement au moins égal à 14 pouces et au plus égal à 24 pouces. Enfin, toujours optionnellement, l'indice de charge LI va de 80 à 116.

La hauteur de flanc H est définie par H=SW x AR / 100 avec SW la largeur de section nominale et AR le rapport d'aspect nominal du pneumatique, par exemple comme indiqué dans le manuel de la norme ETRTO 2021.

Avantageusement, la couche renforcée est la couche axialement la plus extérieure dans le ou chaque flanc. La couche renforcée la plus axialement extérieure présente, dans un plan de coupe méridien, la plus grande longueur curviligne de contact avec la couche de rigidification dans le flanc. Ainsi, compte tenu de la continuité de la couche renforcée la plus axialement extérieure, la couche renforcée la plus axialement extérieure est la couche renforcée la plus axialement extérieure dans la plus grande partie du flanc. Généralement, la couche renforcée la plus axialement extérieure est la couche la plus axialement extérieure à l'équateur.

Dans des modes de réalisation dans lesquels les deux côtés du pneumatique sont pourvus de l'invention, le pneumatique comprend :
- une ou plusieurs couche(s) renforcée(s) s'étendant radialement dans chaque flanc, la ou chaque couche renforcée comprenant des éléments de renfort filaires noyés dans une matrice polymérique,
- deux couches de rigidification agencées de chaque côté du plan médian du pneumatique, chaque couche de rigidification s'étendant radialement respectivement depuis chaque bourrelet jusque dans chaque flanc adjacent audit bourrelet, chaque couche de rigidification étant agencée dans ledit flanc :
   ∘ axialement entre la couche renforcée et la couche externe dudit flanc, et
   ∘ au contact d'au moins une partie de la couche renforcée et au contact d'au moins une partie de la couche externe dudit flanc,
le rapport R du module MA100R à 100% d'allongement de la matrice polymérique de la couche renforcée sur le module MA10B à 10% d'allongement de la couche de rigidification agencée dans ledit flanc est tel que R x 1000 ≥ (0,011 x MA10B x MA10B) - 1,71 x MA10B + 86,70.

Dans des modes de réalisation optionnels mais avantageux, R x 1000 ≥ (0,0106 x MA10B x MA10B) - 1,72 x MA10B + 90,40.

Dans des modes de réalisation optionnels mais avantageux, R x 1000 ≤ (0,0127 x MA10B x MA10B) - 2,03 x MA10B + 109.

Dans des modes de réalisation optionnels mais avantageux, MA10B ≥ 30,0 MPa, de préférence MA10B ≥ 40,0 MPa et plus préférentiellement 40,0 MPa ≤ MA10B ≤ 70,0 MPa. En raison de sa forte rigidité, une telle couche de rigidification permet d'améliorer le comportement dynamique du pneumatique en rigidifiant la zone dans laquelle elle est située. En particulier, cela permet d'améliorer la rigidité de dérive du pneumatique.

Dans des modes de réalisation optionnels mais avantageux, MA100R ≥ 1,0 MPa, de préférence MA100R ≥ 1,5 MPa.

Dans des modes de réalisation optionnels mais avantageux, MA100R ≤ 2,5 MPa, de préférence MA100R ≤ 2,0 MPa.

Des modes de réalisation sont particulièrement sensibles à la dissipation d'énergie et à l'élévation de la température entre la couche de rigidification et la couche de carcasse axialement la plus extérieure. En effet, l'avènement des véhicules de tourisme à motorisation électrique ou hybride entraine une augmentation du poids des véhicules, notamment en raison des batteries dont le poids est relativement important et sensiblement proportionnel à l'autonomie des véhicules. Ainsi, par exemple, pour augmenter l'autonomie d'un véhicule électrique, il est nécessaire d'augmenter la taille des batteries et par conséquent, le poids du véhicule. De façon simple, on estime aujourd'hui qu'un kilomètre d'autonomie d'un moteur électrique conduit à augmenter le poids du véhicule d'un kilogramme. Ainsi, afin d'atteindre une autonomie de 500 kilomètres, il est nécessaire d'augmenter le poids d'un véhicule à motorisation thermique d'environ 500 kg. Afin d'équiper de tels véhicules, il est nécessaire d'utiliser des pneumatiques capables de porter une charge très élevée. Ainsi, les manufacturiers pneumatiques ont décidé de créer un nouveau type de pneumatique. Ce nouveau type est désormais connu sous la dénomination HIGH LOAD CAPACITY dans le manuel de la norme ETRTO 2021. Ce nouveau type permet de garantir que la charge qu'est capable de porter le pneumatique d'une dimension donnée est supérieure à celle qu'un pneumatique de même dimension mais dans sa version STANDARD LOAD ou dans sa version EXTRA-LOAD serait capable de porter. Pour la dimension 255/35R18, le pneumatique de type HIGH LOAD CAPACITY présente ainsi un indice de charge égal à 98 indiquant qu'il est capable de porter une charge de 750 kg à une pression de 290 kPa. Dans sa version EXTRA-LOAD, un pneumatique de dimension 255/35R18 présente un indice de charge égal à 94. Cela signifie que, à une pression de 290 kPa, le pneumatique est capable de porter une charge de 670 kg. Dans sa version STANDARD LOAD (en abrégé SL), un pneumatique de dimension 255/35R18 présente un indice de charge égal à 90 et est capable de porter une charge de 600 kg à une pression de 250 kPa.

Ainsi, les pneumatiques de type HIGH LOAD CAPACITY, de par la charge relativement élevée qu'ils sont amenés à porter, sont amenés à fonctionner dans conditions d'utilisation très sollicitantes, notamment des conditions de charge élevée. Ainsi, il est particulièrement avantageux que le pneumatique de l'invention soit, dans certains modes de réalisation, un pneumatique du type HIGH LOAD CAPACITY selon le manuel de la norme ETRTO 2021.

En augmentant l'indice de charge du pneumatique de l'invention par rapport à l'indice de charge d'un pneumatique présentant la même dimension dans sa version EXTRA-LOAD, le pneumatique de type HIGH LOAD CAPACITY permet d'augmenter la capacité de charge de l'ensemble monté sans pour autant modifier l'habitabilité, la compacité et le confort du véhicule sur lequel il est utilisé. En effet, la dimension du pneumatique étant identique à celle du pneumatique dans sa version EXTRA-LOAD, l'ensemble monté n'encombre pas davantage que le pneumatique dans sa version EXTRA-LOAD. Un pneumatique de type HIGH LOAD CAPACITY pourra porter un marquage distinctif permettant de le distinguer de sa version STANDARD LOAD et de sa version EXTRA-LOAD, par exemple un marquage du type HL (pour HIGH LOAD) ou XL+ (pour EXTRA LOAD +). Un tel marquage est notamment divulgué dans le manuel de la norme ETRTO 2021, page 3 de la section General Notes - Passenger Car tyres. Des exemples de dimensions de pneumatiques du type HIGH LOAD CAPACITY sont également divulgués dans le manuel de la norme ETRTO 2021, page 44, paragraphe 9.1 de la section Passenger Car tyres - Tyres with metric designation.

Un pneumatique de type HIGH LOAD CAPACITY peut être caractérisé par son indice de charge LI tel que LI ≥ LI'+1 et LI' étant l'indice de charge d'un pneumatique EXTRA LOAD présentant la même dimension selon le manuel de la norme ETRTO 2021. L'indice de charge LI' est l'indice de charge d'un pneumatique EXTRA LOAD présentant la même dimension, c'est-à-dire la même largeur de section nominale, le même rapport d'aspect nominal, la même structure (R et ZR étant considérée comme identique) et le même diamètre de jante nominale. L'indice de charge LI' est donné par le manuel de la norme ETRTO 2021, notamment dans la partie intitulée Passenger Car Tyres - Tyres with Metric Designation, pages 22 à 43. En fonction de la dimension, on aura LI=LI'+1, LI=LI'+2, LI=LI'+3 ou bien encore LI=LI'+4. Dans la plupart des modes de réalisation, LI'+1 ≤ LI ≤ LI'+4, et même LI'+2 ≤ LI ≤ LI'+4.

Des solutions techniques pour concevoir des pneumatiques du type HIGH LOAD CAPACITY sont notamment décrites dans WO2022/074341, WO2022/074342, WO2022/074343, WO2022/074344, WO2022/074345.

Avantageusement, le pneumatique présentant une hauteur de flanc H définie par H=SW x AR / 100 avec SW la largeur de section nominale et AR le rapport d'aspect nominal du pneumatique, un indice de charge LI vérifie H/Ll ≤ 1,00, de préférence 0,72 ≤ H/Ll ≤ 1,00 et plus préférentiellement 0,72 ≤ H/Ll ≤ 0,95, avec SW, AR et LI étant définis selon le manuel de la norme ETRTO 2021. Ainsi, on applique préférentiellement l'invention à des pneumatiques susceptibles de fléchir de façon relativement importante car présentant un indice de charge relativement élevé pour une hauteur de flanc relativement petite pour cet indice de charge. En effet, en raison de la flexion relativement importante, l'interface entre la couche de rigidification et la couche de carcasse est fortement sollicitée et entraine une dissipation d'énergie que l'invention permet avantageusement de maitriser.

La largeur de section nominale SW, le rapport d'aspect nominal AR et l'indice de charge LI sont notamment indiqués sur le marquage de la dimension inscrite sur le flanc du pneumatique et conformes au manuel de la norme ETRTO 2021.

Dans des modes de réalisation, le pneumatique comprenant une armature de carcasse comprenant au moins une couche de carcasse ancrée dans chaque bourrelet, le sommet comprenant une armature de sommet, la au moins une couche de carcasse s'étendant radialement dans chaque flanc et axialement dans le sommet radialement intérieurement à l'armature de sommet, la au moins une couche de carcasse forme la couche renforcée. Dans ces modes de réalisation, la couche de carcasse formant la couche renforcée, la matrice polymérique est la matrice de calandrage de la couche de carcasse et les éléments de renfort filaires sont les éléments de renfort filaires de la couche de carcasse.

De façon optionnelle, la couche de carcasse ancrée dans chaque bourrelet est délimitée axialement par deux extrémités axiales de ladite couche de carcasse et comprend des éléments de renfort filaires de carcasse s'étendant axialement d'une extrémité axiale à l'autre extrémité axiale de la couche de carcasse.

Optionnellement, chaque élément de renfort filaire de carcasse s'étend selon une direction principale formant, avec la direction circonférentielle du pneumatique un angle en valeur absolue, supérieur ou égal à 60°, de préférence allant de 80° à 90°.

Dans une première variante de la première configuration, l'armature de carcasse comprend une unique couche de carcasse ancrée dans chaque bourrelet et s'étendant radialement dans chaque flanc et axialement dans le sommet radialement intérieurement à l'armature de sommet, l'unique couche de carcasse formant la couche renforcée.

Dans certains modes de réalisation de cette première variante, l'unique couche de carcasse formant un enroulement autour d'un élément de renforcement circonférentiel de chaque bourrelet de sorte qu'une portion axialement intérieure de la couche de carcasse est agencée axialement à l'intérieur d'une portion axialement extérieure de la couche de carcasse et de sorte que chaque extrémité axiale de la couche de carcasse soit agencée radialement à l'extérieur de chaque élément de renforcement circonférentiel, la partie de la couche renforcée au contact de laquelle est agencée la couche de rigidification dans ledit flanc est formée par une partie de la portion axialement intérieure de l'unique couche de carcasse dans ledit flanc. Dans ces modes de réalisation, la portion axialement extérieure de la couche de carcasse est relativement courte. La couche de rigidification est ainsi au moins au contact d'une partie de la portion axialement extérieure au moins dans le bourrelet et d'une partie de la portion axialement intérieure au moins dans ledit flanc. De façon optionnelle, le pneumatique comprenant une couche de bourrage agencée axialement au moins entre la portion axialement intérieure et la portion axialement extérieure de l'unique couche de carcasse et s'étendant radialement depuis l'élément de renforcement circonférentiel vers le sommet du pneumatique, la couche de rigidification est ainsi également au contact d'au moins une partie de la couche de bourrage.

Dans d'autres modes de réalisation de cette première variante, l'unique couche de carcasse formant un enroulement autour d'un élément de renforcement circonférentiel de chaque bourrelet de sorte qu'une portion axialement intérieure de la couche de carcasse est agencée axialement à l'intérieur d'une portion axialement extérieure de la couche de carcasse et de sorte que chaque extrémité axiale de la couche de carcasse soit agencée radialement à l'extérieur de chaque élément de renforcement circonférentiel, la partie de la couche renforcée au contact de laquelle est agencée la couche de rigidification dans ledit flanc est formée par une partie de la portion axialement extérieure de l'unique couche de carcasse dans ledit flanc. Dans ces modes de réalisation, la portion axialement extérieure de la couche de carcasse est relativement longue. La couche de rigidification est ainsi au contact d'une partie de la portion axialement extérieure au moins dans le bourrelet et d'une autre partie de la portion axialement extérieure au moins dans ledit flanc.

Dans d'autres modes de réalisation de cette première variante, chaque bourrelet comprenant au moins des premier et deuxième éléments de renforcement circonférentiels, une portion de la couche de carcasse est agencée axialement entre deux des au moins premier et deuxième éléments de renforcement circonférentiels, par exemple comme cela est décrit dans WO2021/123522.

Dans une deuxième variante de la première configuration, l'armature de carcasse comprend des première et deuxième couches de carcasse, chaque première et deuxième couche de carcasse est ancrée dans chaque bourrelet et s'étendant radialement dans chaque flanc et axialement dans le sommet radialement intérieurement à l'armature de sommet, une des première et deuxième couches de carcasse formant la couche renforcée.

Dans certains modes de réalisation de cette deuxième variante, la première couche de carcasse forme un enroulement autour d'un élément de renforcement circonférentiel de chaque bourrelet de sorte qu'une portion axialement intérieure de la première couche de carcasse est agencée axialement à l'intérieur d'une portion axialement extérieure de la première couche de carcasse et de sorte que chaque extrémité axiale de la première couche de carcasse soit agencée radialement à l'extérieur de chaque élément de renforcement circonférentiel, et chaque extrémité axiale de la deuxième couche de carcasse est agencée radialement à l'intérieur de chaque extrémité axiale de la première couche.

Dans une première alternative de ces modes de réalisation, chaque extrémité axiale de la deuxième couche de carcasse est agencée axialement entre les portions axialement intérieure et extérieure de la première couche de carcasse, la deuxième couche de carcasse formant la couche renforcée. Dans cette première alternative, la couche de rigidification est ainsi au moins au contact d'une partie de la portion axialement extérieure de la première couche de carcasse au moins dans le bourrelet et d'une partie de la deuxième couche de carcasse au moins dans ledit flanc. De façon optionnelle, le pneumatique comprenant une couche de bourrage agencée axialement au moins entre la portion axialement intérieure et la portion axialement extérieure de la première couche de carcasse et s'étendant radialement depuis l'élément de renforcement circonférentiel vers le sommet du pneumatique, la couche de rigidification est ainsi également au contact d'au moins une partie de la couche de bourrage.

Dans une deuxième alternative de ces modes de réalisation, chaque extrémité axiale de la deuxième couche de carcasse est agencée axialement à l'intérieur de chaque portion axialement intérieure de la première couche de carcasse, la première couche de carcasse formant la couche renforcée. Dans cette deuxième alternative, la couche de rigidification est ainsi au moins au contact d'une partie de la portion axialement extérieure de la première couche de carcasse au moins dans le bourrelet et d'une partie de la première couche de carcasse au moins dans ledit flanc. De façon optionnelle, le pneumatique comprenant une couche de bourrage agencée axialement au moins entre la portion axialement intérieure et la portion axialement extérieure de la première couche de carcasse et s'étendant radialement depuis l'élément de renforcement circonférentiel vers le sommet du pneumatique, la couche de rigidification est ainsi également au contact d'au moins une partie de la couche de bourrage.

Dans une troisième alternative de ces modes de réalisation, chaque extrémité axiale de la deuxième couche de carcasse est agencée axialement à l'extérieur de chaque portion axialement extérieure de la première couche de carcasse, la deuxième couche de carcasse formant la couche renforcée. Dans cette troisième alternative, la couche de rigidification est ainsi au moins au contact d'une partie de la deuxième couche de carcasse au moins dans le bourrelet et d'une autre partie de la deuxième couche de carcasse au moins dans ledit flanc.

Dans d'autres modes de réalisation de cette deuxième variante, chaque bourrelet comprend une pluralité d'éléments de renforcement circonférentiels, au moins une portion de chaque première et deuxième couche de carcasse étant agencée axialement entre au moins deux éléments de renforcement circonférentiels de la pluralité d'éléments de renforcement circonférentiels, par exemple comme cela est décrit dans WO2021/123522.

Dans une deuxième configuration, le pneumatique comprend :
- une armature de carcasse comprenant au moins une couche de carcasse ancrée dans chaque bourrelet, le sommet comprenant une armature de sommet, la couche de carcasse s'étendant radialement dans chaque flanc et axialement dans le sommet radialement intérieurement à l'armature de sommet,
- une couche de renfort de flanc agencée axialement à l'extérieur de l'armature de carcasse,
la couche de renfort de flanc formant la couche renforcée.

A la différence d'une couche de carcasse ancrée dans chaque bourrelet, la couche de renfort de flanc n'est pas ancrée dans chaque bourrelet. Ainsi, chaque extrémité radialement intérieure de la couche de renfort de flanc est agencée radialement à l'extérieur de chaque bourrelet. La couche de renfort de flanc s'étend au moins radialement dans chaque flanc et présente :
- une extrémité radialement intérieure agencée radialement à l'intérieur de l'équateur du pneumatique, et
- une extrémité radialement extérieure agencée radialement à l'extérieur de l'équateur du pneumatique.

Dans certains modes de réalisation dans lesquels l'unique couche de carcasse ou la première couche de carcasse forme un enroulement, chaque extrémité axiale de ladite couche de carcasse est agencée radialement à l'intérieur de l'équateur du pneumatique et encore plus préférentiellement agencée à une distance radiale inférieure ou égale à 30 mm d'une extrémité radialement intérieure de chaque élément de renforcement circonférentiel de chaque bourrelet. En agençant chaque extrémité axiale de l'unique couche de carcasse ou de la première couche de carcasse à l'intérieur de l'équateur du pneumatique, on réduit significativement la masse de l'armature de carcasse. En outre, l'immense majorité des jantes actuellement utilisées pour des pneumatiques pour véhicule de tourisme présente des crochets de type J dont la hauteur est, dans tous les cas inférieure à 30 mm. L'agencement très préférentiel de chaque extrémité axiale dans une zone correspondant radialement sensiblement au crochet de jante permet de protéger mécaniquement chaque extrémité axiale. En effet, si chaque extrémité axiale était agencée dans le flanc radialement trop au-dessus de chaque élément de renforcement circonférentiel de chaque bourrelet, c'est-à-dire à une distance radiale significativement supérieure à 30 mm de l'extrémité radialement intérieure de chaque élément de renforcement circonférentiel, chaque extrémité axiale se retrouverait alors dans une zone flexible du pneumatique soumise à de trop fortes sollicitations. En particulier, de telles sollicitations sont particulièrement importantes dans le cas d'un pneumatique de type HIGH LOAD CAPACITY.

Dans d'autres modes de réalisation dans lesquels l'unique couche de carcasse ou la première couche de carcasse forme un enroulement, chaque extrémité axiale de ladite couche de carcasse est agencée radialement à l'extérieur de l'équateur du pneumatique. Avantageusement, dans ces autres modes de réalisation, chaque extrémité axiale de l'unique couche de carcasse ou de la première couche de carcasse est agencée très préférentiellement axialement à l'intérieur d'une extrémité axiale de la ou d'au moins une des couche(s) de sommet de l'armature de sommet.

Dans des modes de réalisation, le sommet comprend une armature de sommet comprenant une armature de travail comprenant une couche de travail radialement intérieure et une couche de travail radialement extérieure agencée radialement à l'extérieur de la couche de travail radialement intérieure.

De façon optionnelle, chaque couche de travail est délimitée axialement par deux extrémités axiales de ladite couche de travail et comprend des éléments de renfort de travail s'étendant axialement d'une extrémité axiale à l'autre extrémité axiale de ladite couche de travail les uns sensiblement parallèlement aux autres.

De façon optionnelle, chaque élément de renfort de travail s'étend selon une direction principale formant, avec la direction circonférentielle du pneumatique, un angle, en valeur absolue, strictement supérieur à 10°, de préférence allant de 15° à 50° et plus préférentiellement allant de 20° à 35°.

De façon préférée, dans les modes de réalisation dans lesquels l'armature de travail comprend une couche de travail radialement la plus intérieure et une couche de travail radialement la plus extérieure agencée radialement à l'extérieur de la couche radialement la plus intérieure, la direction principale selon laquelle s'étend chaque élément de renfort de travail de la couche de travail radialement la plus intérieure et la direction principale selon laquelle s'étend chaque élément de renfort de travail de la couche de travail radialement la plus extérieure forment, avec la direction circonférentielle du pneumatique, des angles d'orientations opposées.

De façon optionnelle, l'armature de sommet comprend une armature de frettage délimitée axialement par deux extrémités axiales de l'armature de frettage et comprenant au moins un élément de renfort de frettage enroulé circonférentiellement hélicoïdalement de façon à s'étendre axialement entre les extrémités axiales de l'armature de frettage.

De façon préférée, l'armature de frettage est agencée radialement à l'extérieur de l'armature de travail.

De façon préférée, le ou chaque élément de renfort de frettage s'étend selon une direction principale formant, avec la direction circonférentielle du pneumatique, un angle, en valeur absolue, inférieur ou égal à 10°, de préférence inférieur ou égal à 7° et plus préférentiellement inférieur ou égal à 5°.

L'invention sera mieux comprise à la lecture de la description qui va suivre, donnée uniquement à titre d'exemple non limitatif et faite en se référant aux dessins dans lesquels:
- la figure 1 est une vue, dans un plan de coupe méridien, d'un pneumatique selon un premier mode de réalisation de l'invention,
- la figure 2 est une vue de détails d'un des flancs du pneumatique de la figure 1,
- la figure 3 est une vue de détails d'un des bourrelets et d'une partie d'un des flancs du pneumatique de la figure 1,
- les figures 4 à 10 sont des vues analogues à celles de la figure 1 de pneumatiques respectivement selon des deuxième, troisième, quatrième, cinquième, sixième, septième et huitième modes de réalisation.

Sur les figures, on a représenté un repère X, Y, Z correspondant aux directions habituelles respectivement axiale (Y), radiale (Z) et circonférentielle (X) d'un pneumatique ou d'un ensemble monté.

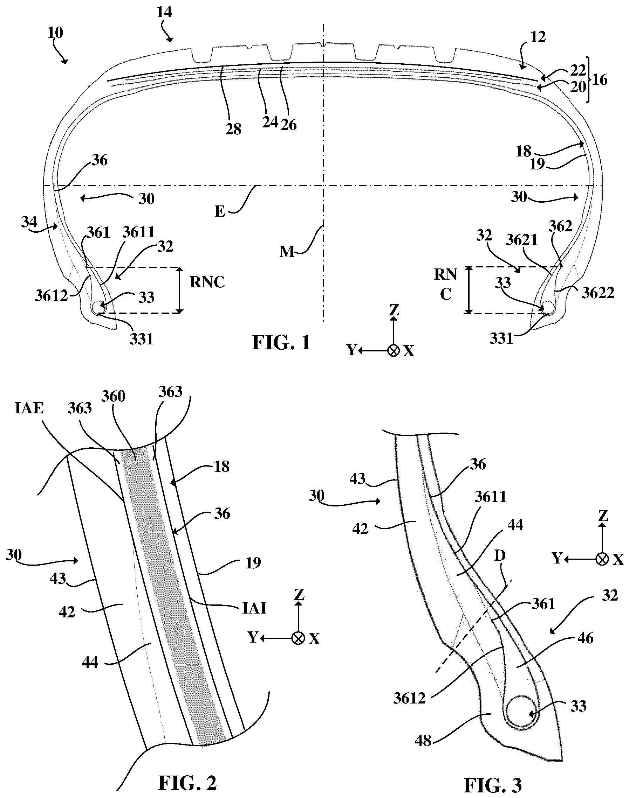

On a représenté sur les figures 1 à 3 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est destiné à un véhicule de tourisme et présente des dimensions 235/35 R19. Sur les différentes figures, le pneumatique 10 est représenté à l'état neuf, c'est-à-dire n'ayant pas encore roulé.

Le pneumatique 10 comprend un sommet 12 comprenant une bande de roulement 14 destinée à entrer en contact avec un sol lors du roulage et une armature de sommet 16 s'étendant dans le sommet 12 selon la direction circonférentielle X. Le pneumatique 10 comprend également une couche interne d'étanchéité 18 à un gaz de gonflage étant destiné à délimiter une cavité interne avec un support de montage du pneumatique 10 une fois le pneumatique 10 monté sur le support de montage, par exemple une jante, cette cavité étant destinée à être mise sous pression par le gaz de gonflage. La couche interne d'étanchéité 18 porte une surface interne 19 du pneumatique 10.

L'armature de sommet 16 comprend une armature de travail 20 et une armature de frettage 22. L'armature de travail 20 comprend au moins une couche de travail et ici comprend deux couches de travail comprenant une couche de travail 24 radialement intérieure et une couche de travail 26 radialement extérieure agencée radialement à l'extérieur de la couche de travail 24 radialement intérieure.

L'armature de frettage 22 comprend au moins une couche de frettage et comprend ici une couche de frettage 28.

L'armature de sommet 16 est agencée radialement à l'intérieur de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12. Sur la figure 3, on a représenté la délimitation entre chaque bourrelet 32 et chaque flanc adjacent 30 par une ligne D en tirets.

Le pneumatique 10 comprend une armature de carcasse 34. L'armature de sommet 16 est agencée radialement entre la bande de roulement 14 et l'armature de carcasse 34. L'armature de carcasse 34 comprend au moins une couche de carcasse 36, ici une unique couche de carcasse 36, ancrée dans chaque bourrelet 32. La couche de carcasse 36 s'étend radialement dans chaque flanc 30 et axialement dans le sommet 12 radialement intérieurement à l'armature de sommet 16.

La couche de carcasse 36 ancrée dans chaque bourrelet 32 forme un enroulement autour d'un élément de renforcement circonférentiel 33 de chaque bourrelet 32 de sorte qu'une portion axialement intérieure 3611, 3621 de la couche de carcasse 36 ancrée dans chaque bourrelet 32 est agencée axialement à l'intérieur d'une portion axialement extérieure 3612, 3622 de la couche de carcasse 36 ancrée dans chaque bourrelet 32 et de sorte que chaque extrémité axiale 361, 362 délimitant axialement la couche de carcasse 36 ancrée dans chaque bourrelet 32 soit agencée radialement à l'extérieur de chaque élément de renforcement circonférentiel 33. Chaque extrémité axiale 361, 362 de l'unique couche de carcasse 36 ancrée dans chaque bourrelet 32 est agencée radialement à l'intérieur de l'équateur E du pneumatique. Plus précisément, chaque extrémité axiale 361, 362 de la couche de carcasse 36 ancrée dans chaque bourrelet 32 est agencée à une distance radiale RNC inférieure ou égale à 30 mm d'une extrémité radialement intérieure 331 de chaque élément de renforcement circonférentiel 33 de chaque bourrelet 32. Ici RNC=23 mm.

Chaque couche de travail 24, 26, de frettage 28 et de carcasse 36 comprend une matrice polymérique, ici élastomérique, dans laquelle sont noyés un ou des éléments de renfort de la couche correspondante, ici des éléments de renfort filaires. La structure des différentes couches et des différents éléments de renfort est conventionnelle, telle que par exemple décrite dans les demandes WO2021250331, WO2022074341 ou WO2022069819.

En particulier, en référence à la figure 2, la couche renforcée axialement la plus extérieure dans chaque flanc 30, ici l'unique couche de carcasse 36, comprend des éléments de renfort filaires 360 noyés dans une matrice polymérique 363. Les éléments de renfort filaires 360 s'étendent axialement d'une extrémité axiale à l'autre de l'unique couche de carcasse 36 selon une direction principale formant avec la direction circonférentielle X du pneumatique 10, un angle, en valeur absolue, supérieur ou égal à 60°, de préférence allant de 80° à 90° et ici égal à 90°.

La couche de carcasse 36 est séparée des couches adjacentes avec lesquelles sa matrice polymérique 363 est en contact par des interfaces axialement intérieure IAI et extérieure IAE.

La matrice polymérique 363 de la couche de carcasse 36 présente un module MA100R à 100% d'allongement tel que MA100R ≥ 1,0 MPa, de préférence MA100R ≥ 1,5 MPa et tel que MA100R ≤ 2,5 MPa, de préférence MA100R ≤ 2,0 MPa. Ici MA100R=1,7 MPa.

Chaque flanc 30 porte un marquage indiquant la dimension du pneumatique 10. En l'espèce, le pneumatique 10 présente une largeur de section nominale SW égale à 235, un rapport d'aspect nominal AR égal à 35, un diamètre de jante nominale égal à 19. Le pneumatique 10 présente donc une hauteur de flanc H définie par SW x AR / 100 ici égale à 82. Le pneumatique 10 est une version EXTRA LOAD de la dimension 235/35 R19 et présente un indice de charge égal à 91 comme cela est indiqué à la page 38 de la partie Passenger Car Tyres - Tyres with Metric Designation du manuel de la norme ETRTO 2021. Le pneumatique 10 est tel que 0,72 ≤ H/Ll ≤ 1,00, de préférence 0,72 ≤ H/Ll ≤ 0,95 et ici H/LI=0,90.

En référence aux figures 1 à 3, chaque flanc 30 comprend une couche externe 42 dudit flanc 30. Chaque couche externe 42 porte une surface externe 43. Le pneumatique 10 comprend une couche 44 de rigidification s'étendant radialement depuis chaque bourrelet 32 jusque dans le flanc 30 adjacent à chaque bourrelet 32.

Le pneumatique 10 comprend une couche 46 de bourrage agencée axialement au moins entre la portion axialement intérieure 3611 et la portion axialement extérieure 3612 de l'unique couche de carcasse 36 et s'étendant radialement depuis l'élément de renforcement circonférentiel 33 vers le sommet 12. Le pneumatique 10 comprend une couche 48 d'assise du pneumatique 10 destinée à être au contact d'un support de montage du pneumatique 10 lorsque le pneumatique 10 est monté sur un support de montage, par exemple une jante.

Dans ce premier mode de réalisation, l'unique couche de carcasse 36 forme la couche renforcée. Ainsi, dans chaque flanc 30, chaque couche de rigidification 44 est agencée, axialement entre l'unique couche de carcasse 36 et la couche externe 42 du flanc 30. Dans chaque flanc 30, chaque couche de rigidification 44 est agencée au contact d'au moins une partie de l'unique couche de carcasse 36. Dans chaque flanc 30, chaque couche de rigidification 44 est agencée au contact d'au moins une partie de la couche externe 42.

Ainsi, la partie de la couche renforcée au contact de laquelle est agencée la couche de rigidification 44 dans chaque flanc 30 est formée par une partie de chaque portion axialement intérieure 3611, 3621 de l'unique couche de carcasse 36 dans chaque flanc 30. En outre, la couche de rigidification 44 est au contact d'une partie de chaque portion axialement extérieure 3612, 3622 dans chaque bourrelet 32 et d'une partie de la portion axialement intérieure 3611, 3612 dans chaque flanc 30. La couche de rigidification 44 est ainsi également au contact d'une partie de la couche de bourrage 46.

En particulier, la couche de rigidification 44 présente un module MA10B à 10% d'allongement tel que MA10B ≥ 30,0 MPa, de préférence MA10B ≥ 40,0 MPa et plus préférentiellement 40,0 MPa ≤ MA10B ≤ 70,0 MPa. Ici, MA10B=48 MPa.

La matrice polymérique de la couche renforcée axialement la plus extérieure au contact de laquelle est agencée la couche de rigidification 44 dans chaque flanc 30, ici de l'unique couche de carcasse 36, et la couche de rigidification 44 sont telles que le rapport R=MA100R/MA10B est tel que R x 1000 ≥ (0,011 x MA10B x MA10B) - 1,71 x MA10B + 86,70, de préférence R x 1000 ≥ (0,0106 x MA10B x MA10B) - 1,72 x MA10B + 90,40. En outre, R est préférentiellement tel que R x 1000 ≤ (0,0127 x MA10B x MA10B) - 2,03 x MA10B + 109. Ici, 1000 x R=35,42.

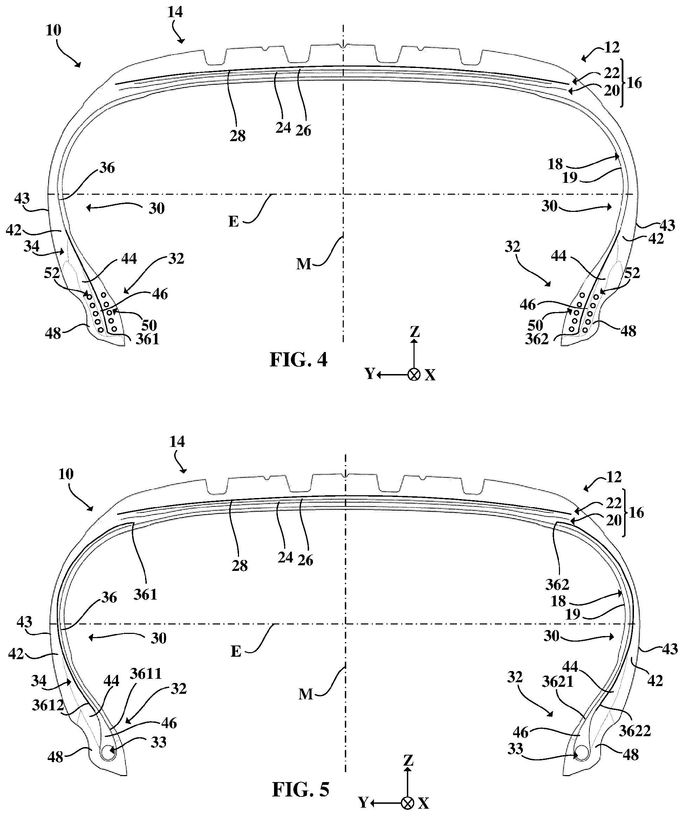

On va maintenant décrire en référence aux figures 4 à 10 des pneumatiques respectivement selon des deuxième, troisième, quatrième, cinquième, sixième, septième et huitième modes de réalisation. Les éléments analogues à ceux des figures précédentes sont désignés par des références identiques.

A la différence du pneumatique selon le premier mode de réalisation, chaque bourrelet 32 du pneumatique 10 selon le deuxième mode de réalisation de la figure 4 comprend au moins des premier et deuxième éléments de renforcement circonférentiels 50, 52. Une portion de l'unique couche de carcasse 36 est agencée axialement entre les premier et deuxième éléments de renforcement circonférentiels 50, 52.

A la différence du pneumatique selon le premier mode de réalisation, dans le pneumatique 10 selon le troisième mode de réalisation illustré sur la figure 5, chaque extrémité axiale 361, 362 de couche de carcasse 36 ancrée dans chaque bourrelet et formant un enroulement est agencée radialement à l'extérieur de l'équateur E et encore plus préférentiellement agencée axialement à l'intérieur des extrémités axiales des couches de travail 24 et de frettage 28 de l'armature de sommet 16. Dans ce troisième mode de réalisation, la partie de la couche renforcée au contact de laquelle est agencée la couche de rigidification 44 dans chaque flanc 30 est formée par une partie de chaque portion axialement extérieure 3612, 3622 de l'unique couche de carcasse 36 dans chaque flanc 30. La couche de rigidification 44 est au contact d'une partie de chaque portion axialement extérieure 3612, 3622 dans le bourrelet 32 et d'une autre partie de la portion axialement extérieure 3612, 3622 dans chaque flanc 30.

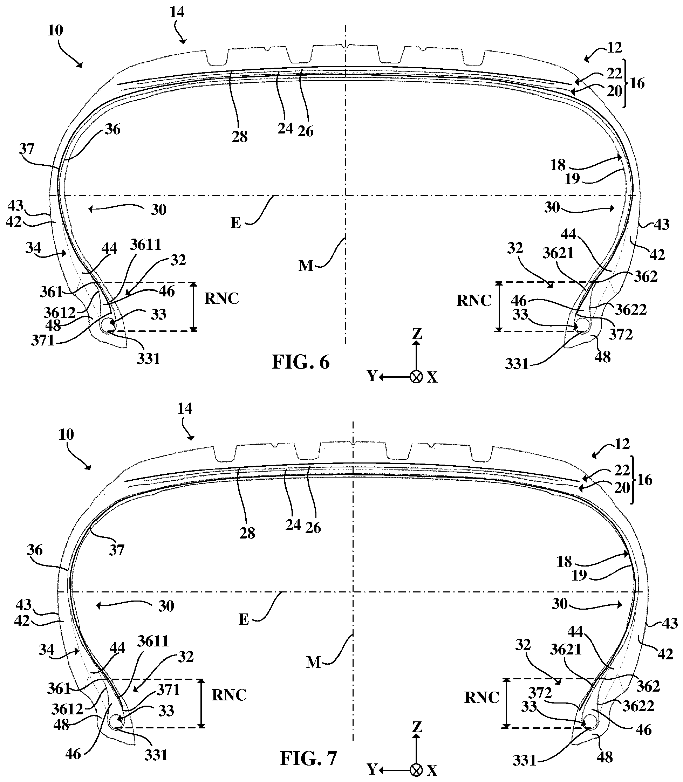

A la différence du pneumatique selon le premier mode de réalisation, l'armature de carcasse 34 du pneumatique 10 selon le quatrième mode de réalisation de la figure 6 comprend des première et deuxième couches de carcasse 36, 37 ancrées dans chaque bourrelet 32. La première couche de carcasse 36 forme un enroulement autour de chaque élément de renforcement circonférentiel 33 de chaque bourrelet 32 de sorte qu'une portion axialement intérieure 3611, 3621 de la première couche de carcasse 36 est agencée axialement à l'intérieur d'une portion axialement extérieure 3612, 3622 de la première couche de carcasse 36 et de sorte que chaque extrémité axiale 361, 362 de la première couche de carcasse 36 soit agencée radialement à l'extérieur de chaque élément de renforcement circonférentiel 33. Chaque extrémité axiale 371, 372 de la deuxième couche de carcasse 37 est agencée radialement à l'intérieur de chaque extrémité axiale de la première couche 361, 362 et est agencée axialement entre les portions axialement intérieure et extérieure 3611, 3612 et 3621, 3622 de la première couche de carcasse 36. La deuxième couche de carcasse 37 forme ici la couche renforcée au contact de laquelle est agencée la couche de rigidification 44. La couche de rigidification 44 est au contact d'une partie de la portion axialement extérieure 3612, 3622 de la première couche de carcasse 36 dans chaque bourrelet 32 et d'une partie de la deuxième couche de carcasse 37 dans chaque flanc 30. La couche de rigidification 44 est également au contact d'une partie de la couche de bourrage 46.

A la différence du pneumatique selon le quatrième mode de réalisation, dans le pneumatique 10 selon le cinquième mode de réalisation illustré à la figure 7, chaque extrémité axiale 371, 372 de la deuxième couche de carcasse 37 est agencée axialement à l'intérieur de chaque portion axialement intérieure 3611, 3621 de la première couche de carcasse 36. La première couche de carcasse 36 forme ici la couche renforcée au contact de laquelle est agencée la couche de rigidification 44. La couche de rigidification 44 est au contact d'une partie de chaque portion axialement extérieure 3612, 3622 de la première couche de carcasse 36 dans chaque bourrelet 32 et d'une partie de la première couche de carcasse 36 dans chaque flanc 30. La couche de rigidification 44 est également au contact d'une partie de la couche de bourrage 46.

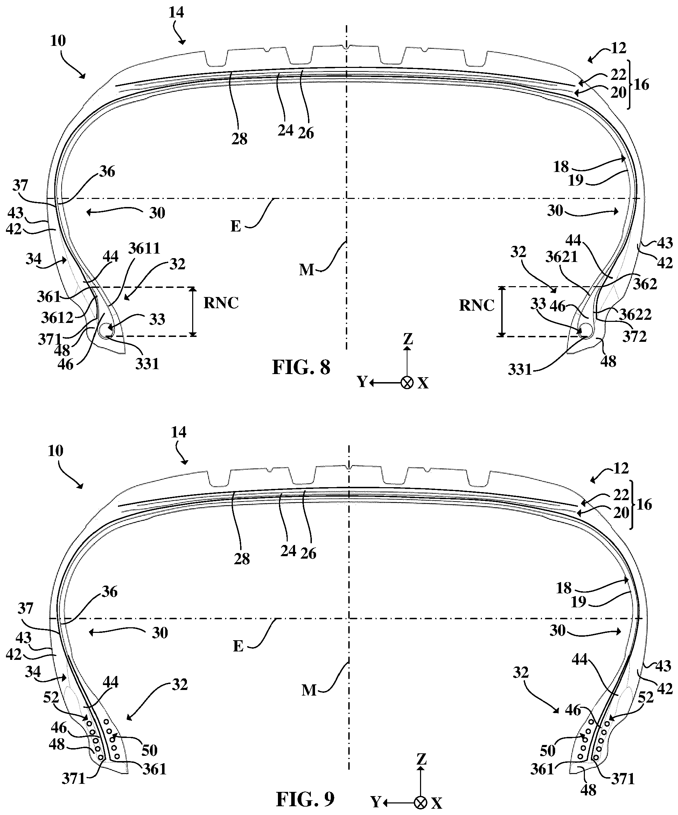

A la différence du pneumatique selon le quatrième mode de réalisation, dans le pneumatique 10 selon le sixième mode de réalisation illustré à la figure 8, chaque extrémité axiale 371, 372 de la deuxième couche de carcasse 37 est agencée axialement à l'extérieur de chaque portion axialement extérieure 3612, 3622 de la première couche de carcasse 36. La deuxième couche de carcasse 37 forme ici la couche renforcée. La couche de rigidification 44 est au contact d'une partie de la deuxième couche de carcasse 37 dans chaque bourrelet 32 et d'une autre partie de la deuxième couche de carcasse 37 dans chaque flanc 30.

A la différence du pneumatique selon le quatrième mode de réalisation, dans le pneumatique 10 selon le septième mode de réalisation illustré à la figure 9, chaque bourrelet 32 comprend une pluralité d'éléments de renforcement circonférentiels 50, 52. Au moins une portion de chaque première et deuxième couche de carcasse 36, 37 est agencée axialement entre deux éléments de renforcement circonférentiels de la pluralité d'éléments de renforcement circonférentiels 50, 52.

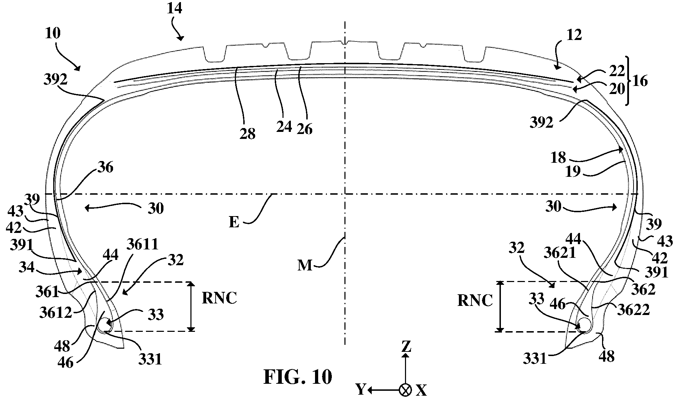

A la différence du pneumatique selon le premier mode de réalisation, dans le pneumatique 10 selon le huitième mode de réalisation illustré sur la figure 10, le pneumatique 10 comprend deux couches de renfort de flanc 39 agencées axialement à l'extérieur de l'armature de carcasse 34. Chaque couche de renfort de flanc 39 s'étend au moins radialement dans chaque flanc 30 et présente une extrémité radialement intérieure 391 agencée radialement à l'intérieur de l'équateur E et une extrémité radialement extérieure 392 agencée radialement à l'extérieur de l'équateur E. Chaque extrémité radialement intérieure 391 de chaque couche de renfort de flanc 39 est agencée radialement à l'extérieur de chaque bourrelet 32 et n'y est donc pas ancrée. La couche de renfort de flanc 39 forme ici la couche renforcée.

### TESTS COMPARATIFS

On a fait rouler deux pneumatiques lors d'un test de roulage analogue à l'essai de performance charge/vitesse décrit en annexe VII du Règlement n°30 de la CEE-ONU, mais dans des conditions encore plus sollicitantes. Les deux pneumatiques présentaient une architecture analogue à celle du quatrième mode de réalisation décrit en référence à la figure 6. Les deux pneumatiques comprenaient des couches de rigidification identiques présentant un module MA10B à 10% d'allongement égal à 48 MPa.

Le premier pneumatique témoin de dimension 235/35R19, non conforme à l'invention, comprenait une première couche de carcasse présentant un module MA100R à 100% d'allongement de la matrice polymérique égal à 1,2 MPa de sorte que la valeur 1000 x R est égale à 25,00 qui est inférieure au seuil de l'invention calculé à 29,96.

Le deuxième pneumatique, de même de dimension 235/35R19, conforme à l'invention, comprenait une première couche de carcasse présentant un module MA100R à 100% d'allongement de la matrice polymérique égal à 1,6 MPa de sorte que la valeur 1000 x R est égale à 33,33 qui est supérieure au seuil de l'invention calculé à 29,96.

Les compositions des matrices polymériques correspondantes sont décrites dans le tableau ci-dessous. Les compositions ont été préparées dans des conditions classiques de mélangeage et ont été vulcanisées dans des conditions également classiques dans le domaine du pneumatique, ici entre 160° et 165° pendant 15 minutes.

| Constituants (en pce) | Composition de la matrice polymérique de la première couche de carcasse du pneumatique témoin | Composition de la matrice polymérique de la première couche de carcasse du pneumatique conforme à l'invention |
|---|---|---|
| NR (1) | 75 pce | 75 pce |
| SBR (2) | 25 pce | 25 pce |
| N375 (3) | 20 pce | 20 pce |
| N550 (4) | 20 pce | 20 pce |
| Huile (5) | 5 pce | 5 pce |
| Soufre | 1,6 pce | 3,2 pce |
| CBS (6) | 1,1 pce | / |
| TBBS (7) | / | 0,7 pce |
| ZnO (8) | 3 pce | 1 pce |
| Acide Stéarique (9) | 1 pce | 1 pce |
| 6PPD (10) | 2 pce | 2 pce |

| | | |
|---|---|---|
| (1) - Caoutchouc naturel ; (2) - SBR avec 26% de motifs Styrène, 24% de motifs vinyl et 47% de motifs 1-4trans, Tg : -54°C ; (3) et (4) - Noir de carbone de grade ASTM selon la norme D-1765 ; (5) - High Quality Rubber Process Oil (Vivatec 500) ; (6) - N-cyclohexyl-benzothiazyl sulphénamide (Santocure CBS de la société Flexsys) ; (7) - N-ter-butyl-2-benzothiazyle sulfénamide (commercialisé par la société Flexsys ; (8) - Oxyde de zinc (grade industriel - commercialisé par la société Umicore) ; (9) - Stéarine (« Pristerene 4931 » commercialisé par la société Uniqema) ; (10) N-1,3-diméthylbutyl-N-phénylparaphénylènediamine (Santoflex 6-PPD commercialisé par la société Flexsys). | | |

Au bout de 31000 km de roulage sur une machine de roulage, le pneumatique témoin a présenté des traces d'un échauffement important de l'interface entre la couche de rigidification et la première couche de carcasse. Le pneumatique conforme à l'invention ne présentait aucune trace d'échauffement anormal de cette même interface.

L'invention ne se limite pas aux modes de réalisation précédemment décrits.

En effet, comme décrit précédemment, on pourra avantageusement appliquer l'invention a des pneumatiques du type HIGH LOAD CAPACITY. Pour de tels pneumatiques, le marquage comprend un indice de charge LI, tel que LI ≥ LI'+1 avec LI' étant l'indice de charge d'un pneumatique EXTRA LOAD présentant la même dimension selon le manuel de la norme ETRTO 2021. De préférence, LI'+1 ≤ LI ≤ LI'+4, et même LI'+2 ≤ LI ≤ LI'+4. Comme décrit précédemment, le pneumatique présentant une dimension 235/35R19 dans sa version EXTRA LOAD présente un indice de charge égal à 91. Ainsi, l'indice de charge LI du pneumatique de dimension 235/35R19 dans sa version HIGH LOAD CAPACITY est tel que LI ≥92, de préférence 92 ≤ LI ≤ 95 et même 93 ≤ LI ≤ 95 et ici LI=94. Le pneumatique dans sa version HIGH LOAD CAPACITY est tel que 0,72 ≤ H/Ll ≤ 1,00, de préférence 0,72 ≤ H/Ll ≤ 0,95 et ici H/LI=0,88.

## Revendications

1. Pneumatique (10) pour véhicule de tourisme comprenant :
- un sommet (12), deux bourrelets (32), deux flancs (30) reliant chaque bourrelet (32) au sommet (12), chaque flanc (30) comprenant une couche externe (42) dudit flanc (30) portant une surface externe (43) dudit flanc (30),
- une couche renforcée s'étendant radialement dans au moins un des flancs (30) et comprenant des éléments de renfort filaires (360) noyés dans une matrice polymérique (363),
- une couche de rigidification (44) s'étendant radialement depuis un des bourrelets (32) jusque dans le flanc (30) adjacent audit bourrelet (32), la couche de rigidification (44) étant agencée, dans ledit flanc (30):
- axialement entre la couche renforcée et la couche externe (42) dudit flanc (30), et
- au contact d'au moins une partie de la couche renforcée et au contact d'au moins une partie de la couche externe (42) dudit flanc (30)
**caractérisé en ce que** le rapport R du module MA100R à 100% d'allongement de la matrice polymérique (363) de la couche renforcée sur le module MA10B à 10% d'allongement de la couche de rigidification (44) est tel que R x 1000 ≥ (0,011 x MA10B x MA10B) - 1,71 x MA10B + 86,70, les modules MA100R et MA10B étant exprimés en MPa.

2. Pneumatique (10) selon la revendication précédente, dans lequel R x 1000 ≥ (0,0106 x MA10B x MA10B) - 1,72 x MA10B + 90,40.

3. Pneumatique (10) selon l'une quelconque des revendications précédentes, dans lequel R x 1000 ≤ (0,0127 x MA10B x MA10B) - 2,03 x MA10B + 109.

4. Pneumatique (10) selon l'une quelconque des revendications précédentes, dans lequel MA10B ≥ 30,0 MPa, de préférence MA10B ≥ 40,0 MPa et plus préférentiellement 40,0 MPa ≤ MA10B ≤ 70,0 MPa.

5. Pneumatique (10) selon l'une quelconque des revendications précédentes, dans lequel MA100R ≥ 1,0 MPa, de préférence MA100R ≥ 1,5 MPa.

6. Pneumatique (10) selon l'une quelconque des revendications précédentes, dans lequel MA100R ≤ 2,5 MPa, de préférence MA100R ≤ 2,0 MPa.

7. Pneumatique (10) selon l'une quelconque des revendications précédentes, étant du type HIGH LOAD CAPACITY selon le manuel de la norme ETRTO 2021.

8. Pneumatique (10) selon l'une quelconque des revendications précédentes, présentant une hauteur de flanc H définie par H=SW x AR / 100 avec SW la largeur de section nominale et AR le rapport d'aspect nominal du pneumatique, un indice de charge LI vérife H/LI ≤1,00, de préférence 0,72 ≤ H/Ll ≤ 1,00, plus préférentiellement 0,72 ≤ H/Ll ≤ 0,95 avec SW, AR et LI étant définis selon le manuel de la norme ETRTO 2021.

9. Pneumatique (10) selon l'une quelconque des revendications précédentes, comprenant une armature de carcasse (34) comprenant au moins une couche de carcasse ancrée dans chaque bourrelet (32), le sommet (12) comprenant une armature de sommet (16), la au moins une couche de carcasse (34) s'étendant radialement dans chaque flanc (30) et axialement dans le sommet (12) radialement intérieurement à l'armature de sommet (16), la au moins une couche de carcasse (34) forme la couche renforcée.

10. Pneumatique (10) selon la revendication 9, l'armature de carcasse (34) comprend une unique couche de carcasse (36) ancrée dans chaque bourrelet (32) et s'étendant radialement dans chaque flanc (30) et axialement dans le sommet (12) radialement intérieurement à l'armature de sommet (16), l'unique couche de carcasse formant la couche renforcée.

11. Pneumatique (10) selon la revendication précédente, dans lequel l'unique couche de carcasse (36) formant un enroulement autour d'un élément de renforcement circonférentiel (33) de chaque bourrelet (32) de sorte qu'une portion axialement intérieure (3611, 3621) de la couche de carcasse (36) est agencée axialement à l'intérieur d'une portion axialement extérieure (3612, 3622) de la couche de carcasse (36) et de sorte que chaque extrémité axiale (361, 362) de la couche de carcasse (36) soit agencée radialement à l'extérieur de chaque élément de renforcement circonférentiel (33) :
- la partie de la couche renforcée au contact de laquelle est agencée la couche de rigidification (44) dans ledit flanc (30) est formée par une partie de la portion axialement intérieure de l'unique couche de carcasse (36) dans ledit flanc (30), ou
- la partie de la couche renforcée au contact de laquelle est agencée la couche de rigidification (44) dans ledit flanc (30) est formée par une partie de la portion axialement extérieure de l'unique couche de carcasse (36) dans ledit flanc (30).

12. Pneumatique (10) selon la revendication 9, dans lequel l'armature de carcasse comprend des première et deuxième couches de carcasse (36, 37), chaque première et deuxième couche de carcasse (36, 37) est ancrée dans chaque bourrelet (32) et s'étendant radialement dans chaque flanc (30) et axialement dans le sommet (12) radialement intérieurement à l'armature de sommet (16), une des première et deuxième couches de carcasse (36; 37) formant la couche renforcée.

13. Pneumatique (10) selon la revendication précédente, dans lequel la première couche de carcasse (36) forme un enroulement autour d'un élément de renforcement circonférentiel (33) de chaque bourrelet (32) de sorte qu'une portion axialement intérieure (3611, 3621) de la première couche de carcasse (36) est agencée axialement à l'intérieur d'une portion axialement extérieure (3612, 3622) de la première couche de carcasse (36) et de sorte que chaque extrémité axiale (361, 362) de la première couche de carcasse (36) soit agencée radialement à l'extérieur de chaque élément de renforcement circonférentiel (33), et chaque extrémité axiale (371, 372) de la deuxième couche de carcasse (37) est agencée radialement à l'intérieur de chaque extrémité axiale (361, 362) de la première couche (36) et :
- axialement entre les portions axialement intérieure (3611, 3621) et extérieure (3612, 3622) de la première couche de carcasse (36), la deuxième couche de carcasse (37) formant la couche renforcée, ou
- axialement à l'intérieur de chaque portion axialement intérieure (3611, 3621) de la première couche de carcasse (36), la première couche de carcasse (36) formant la couche renforcée ou
- axialement à l'extérieur de chaque portion axialement extérieure (3612, 3622) de la première couche de carcasse (36), la deuxième couche de carcasse (37) formant la couche renforcée.

## Patentansprüche

1. Reifen (10) für einen Personenkraftwagen, umfassend:
- eine Krone (12), zwei Wülste (32), zwei Seitenwände (30), die jede Wulst (32) mit der Krone (12) verbinden, wobei jede Seitenwand (30) eine Außenschicht (42) der Seitenwand (30) umfasst, die eine Außenfläche (43) der Seitenwand (30) trägt,
- eine verstärkte Schicht, die sich radial in mindestens einer der Seitenwände (30) erstreckt und fadenförmige Festigkeitsträgerelemente (360) umfasst, die in eine Polymermatrix (363) eingebettet sind,
- eine Versteifungsschicht (44), die sich radial von einer der Wülste (32) aus bis in die an die Wulst (32) angrenzende Seitenwand (30) erstreckt, wobei die Versteifungsschicht (44) in der Seitenwand (30) angeordnet ist:
- axial zwischen der verstärkten Schicht und der äußeren Schicht (42) der Seitenwand (30), und
- in Kontakt mit mindestens einem Teil der verstärkten Schicht und in Kontakt mit mindestens einem Teil der äußeren Schicht (42) der Seitenwand (30) **dadurch gekennzeichnet, dass** das Verhältnis R des Moduls MA100R bei 100 % Dehnung der Polymermatrix (363) der verstärkten Schicht zu dem Modul MA10B bei 10 % Dehnung der Versteifungsschicht (44) derart ist, dass R x 1000 ≥ (0,011 x MA10B x MA10B) - 1,71 x MA10B + 86,70, wobei die Module MA100R und MA10B in MPa ausgedrückt werden.

2. Reifen (10) nach dem vorhergehenden Anspruch, wobei R x 1000 ≥ (0,0106 x MA10B x MA10B) - 1,72 x MA10B + 90,40.

3. Reifen (10) nach einem der vorhergehenden Ansprüche, wobei R x 1000 ≤ (0,0127 x MA10B x MA10B) - 2,03 x MA10B + 109.

4. Reifen (10) nach einem der vorhergehenden Ansprüche, wobei MA10B ≥ 30,0 MPa, vorzugsweise MA10B ≥ 40,0 MPa und noch bevorzugter 40,0 MPa ≤ MA10B ≤ 70,0 MPa.

5. Reifen (10) nach einem der vorhergehenden Ansprüche, wobei MA100R ≥ 1,0 MPa, vorzugsweise MA100R ≥ 1,5 MPa.

6. Reifen (10) nach einem der vorhergehenden Ansprüche, wobei MA100R ≤ 2,5 MPa, vorzugsweise MA100R ≤ 2,0 MPa.

7. Reifen (10) nach einem der vorhergehenden Ansprüche, der gemäß dem ETRTO Standards Manual 2021 vom Typ HIGH LOAD CAPACITY ist.

8. Reifen (10) nach einem der vorhergehenden Ansprüche, der eine Seitenwandhöhe H aufweist, die durch H=SW x AR / 100 definiert ist, wobei SW die Nennquerschnittsbreite ist und AR das Nennquerschnittsverhältnis des Reifens ist, wobei ein Tragfähigkeitsindex LI H/LI ≤ 1,00, vorzugsweise 0,72 ≤ H/LI ≤ 1,00, noch bevorzugter 0,72 ≤ H/LI ≤ 0,95 erfüllt, wobei SW, AR und LI gemäß dem ETRTO Standards Manual 2021 definiert sind.

9. Reifen (10) nach einem der vorhergehenden Ansprüche, umfassend eine Karkassenverstärkung (34), die mindestens eine in jeder Wulst (32) verankerte Karkassenlage umfasst, wobei die Krone (12) eine Kronenverstärkung (16) umfasst, wobei sich die mindestens eine Karkassenlage (34) radial in jeder Seitenwand (30) und axial in der Krone (12) radial innerhalb der Kronenverstärkung (16) erstreckt, wobei die mindestens eine Karkassenlage (34) die verstärkte Schicht bildet.

10. Reifen (10) nach Anspruch 9, wobei die Karkassenverstärkung (34) eine einzige Karkassenlage (36) umfasst, die in jeder Wulst (32) verankert ist und sich radial in jeder Seitenwand (30) und axial in der Krone (12) radial innerhalb der Kronenverstärkung (16) erstreckt, wobei die einzige Karkassenlage die verstärkte Schicht bildet.

11. Reifen (10) nach dem vorhergehenden Anspruch, wobei die einzige Karkassenlage (36) eine Wicklung um ein umfängliches Verstärkungselement (33) jeder Wulst (32) bildet, so dass ein axial innerer Abschnitt (3611, 3621) der Karkassenlage (36) axial innerhalb eines axial äußeren Abschnitts angeordnet ist (3612, 3622) der Karkassenlage (36) angeordnet ist, und so, dass jedes axiale Ende (361, 362) der Karkassenlage (36) radial außerhalb jedes umfänglichen Verstärkungselements (33) angeordnet ist:
- der Teil der verstärkten Schicht, in Kontakt mit welchem die Versteifungsschicht (44) in der Seitenwand (30) angeordnet ist, durch einen Teil des axial inneren Abschnitts der einzigen Karkassenlage (36) in der Seitenwand (30) gebildet wird, oder
- der Teil der verstärkten Schicht, in Kontakt mit welchem die Versteifungsschicht (44) in der Seitenwand (30) angeordnet ist, durch einen Teil des axial äußeren Abschnitts der einzigen Karkassenlage (36) in der Seitenwand (30) gebildet wird.

12. Reifen (10) nach Anspruch 9, wobei die Karkassenverstärkung eine erste und eine zweite Karkassenlage (36, 37) umfasst, wobei jede erste und zweite Karkassenlage (36, 37) in jeder Wulst (32) verankert ist und sich radial in jeder Seitenwand (30) und axial in der Krone (12) radial innerhalb der Kronenverstärkung (16) erstreckt, wobei eine der ersten und zweiten Karkassenlagen (36; 37) die verstärkte Schicht bildet.

13. Reifen (10) nach dem vorhergehenden Anspruch, wobei die erste Karkassenlage (36) eine Wicklung um ein umfängliches Verstärkungselement (33) jeder Wulst (32) bildet, so dass ein axial innerer Abschnitt (3611, 3621) der ersten Karkassenlage (36) axial innerhalb eines axial äußeren Abschnitts (3612, 3622) der ersten Karkassenlage (36) angeordnet ist, und so, dass jedes axiale Ende (361, 362) der ersten Karkassenlage (36) radial außerhalb jedes umfänglichen Verstärkungselements (33) angeordnet ist und jedes axiale Ende (371, 372) der zweiten Karkassenlage (37) radial innerhalb jedes axialen Endes (361, 362) der ersten Karkassenlage (36) angeordnet ist, und:
- axial zwischen den axial inneren (3611, 3621) und äußeren (3612, 3622) Abschnitten der ersten Karkassenlage (36), wobei die zweite Karkassenlage (37) die verstärkte Schicht bildet, oder
- axial innerhalb jedes axial inneren Abschnitts (3611, 3621) der ersten Karkassenlage (36), wobei die erste Karkassenlage (36) die verstärkte Schicht bildet, oder
- axial außerhalb jedes axial äußeren Abschnitts (3612, 3622) der ersten Karkassenlage (36), wobei die zweite Karkassenlage (37) die verstärkte Schicht bildet.

## Claims

1. Tyre (10) for a passenger vehicle, comprising:
- a crown (12), two beads (32), two sidewalls (30) connecting each bead (32) to the crown (12), each sidewall (30) comprising an external layer (42) of said sidewall (30) bearing an external surface (43) of said sidewall (30),
- a reinforced layer extending radially in at least one of the sidewalls (30) and comprising filamentary reinforcing elements (360) embedded in a polymeric matrix (363),
- a stiffening layer (44) extending radially from one of the beads (32) into the sidewall (30) adjacent to said bead (32), the stiffening layer (44) being arranged, in said sidewall (30):
- axially between the reinforced layer and the external layer (42) of said sidewall (30), and
- in contact with at least a part of the reinforced layer and in contact with at least a part of the external layer (42) of said sidewall (30),
**characterized in that** the ratio R of the modulus MA100R at 100% elongation of the polymeric matrix (363) of the reinforced layer to the modulus MA10B at 10% elongation of the stiffening layer (44) is such that R x 1000 ≥ (0.011 x MA10B x MA10B) - 1.71 x MA10B + 86.70, moduli MA100R and MA10B being expressed in MPa.

2. Tyre (10) according to the preceding claim, wherein R x 1000 ≥ (0.0106 x MA10B x MA10B) - 1.72 x MA10B + 90.40.

3. Tyre (10) according to either one of the preceding claims, wherein R x 1000 ≤ (0.0127 x MA10B x MA10B) - 2.03 x MA10B + 109.

4. Tyre (10) according to any one of the preceding claims, wherein MA10B ≥ 30.0 MPa, preferably MA10B ≥ 40.0 MPa and more preferably 40.0 MPa ≤ MA10B ≤ 70.0 MPa.

5. Tyre (10) according to any one of the preceding claims, wherein MA100R ≥ 1.0 MPa, preferably MA100R ≥ 1.5 MPa.

6. Tyre (10) according to any one of the preceding claims, wherein MA100R ≤ 2.5 MPa, preferably MA100R ≤ 2.0 MPa.

7. Tyre (10) according to any one of the preceding claims, which is of the HIGH LOAD CAPACITY type according to the ETRTO Standards Manual, 2021.

8. Tyre (10) according to any one of the preceding claims, having a sidewall height H defined by H=SW x AR / 100 where SW is the nominal section width and AR is the nominal aspect ratio of the tyre, a load index LI satisfying H/LI ≤1.00, preferably 0.72 ≤ H/LI ≤ 1.00, more preferably 0.72 ≤ H/LI ≤ 0.95, where SW, AR and LI are defined in accordance with the ETRTO Standards Manual, 2021.

9. Tyre (10) according to any one of the preceding claims, comprising a carcass reinforcement (34) comprising at least one carcass layer anchored in each bead (32), the crown (12) comprising a crown reinforcement (16), the at least one carcass layer (34) extending radially in each sidewall (30) and axially in the crown (12) radially to the inside of the crown reinforcement (16), the at least one carcass layer (34) forming the reinforced layer.

10. Tyre (10) according to Claim 9, wherein the carcass reinforcement (34) comprises a single carcass layer (36) anchored in each bead (32) and extending radially in each sidewall (30) and axially in the crown (12) radially to the inside of the crown reinforcement (16), the single carcass layer forming the reinforced layer.

11. Tyre (10) according to the preceding claim, wherein, with the single carcass layer (36) forming a winding around a circumferential reinforcing element (33) of each bead (32) such that an axially inner portion (3611, 3621) of the first carcass layer (36) is arranged axially on the inside of an axially outer portion (3612, 3622) of the carcass layer (36) and such that each axial end (361, 362) of the carcass layer (36) is arranged radially on the outside of each circumferential reinforcing element (33):
- the part of the reinforced layer in contact with which the stiffening layer (44) is arranged in said sidewall (30) is formed by a part of the axially inner portion of the single carcass layer (36) in said sidewall (30), or
- the part of the reinforced layer in contact with which the stiffening layer (44) is arranged in said sidewall (30) is formed by a part of the axially outer portion of the single carcass layer (36) in said sidewall (30).

12. Tyre (10) according to Claim 9, wherein the carcass reinforcement comprises first and second carcass layers (36, 37), each first and second carcass layer (36, 37) being anchored in each bead (32) and extending radially in each sidewall (30) and axially in the crown (12) radially to the inside of the crown reinforcement (16), one of the first and second carcass layers (36; 37) forming the reinforced layer.

13. Tyre (10) according to the preceding claim, wherein the first carcass layer (36) forms a winding around a circumferential reinforcing element (33) of each bead (32) such that an axially inner portion (3611, 3621) of the first carcass layer (36) is arranged axially on the inside of an axially outer portion (3612, 3622) of the first carcass layer (36) and such that each axial end (361, 362) of the first carcass layer (36) is arranged radially on the outside of each circumferential reinforcing element (33), and each axial end (371, 372) of the second carcass layer (37) is arranged radially on the inside of each axial end (361, 362) of the first layer (36), and:
- axially between the axially inner portion (3611, 3621) and axially outer portion (3612, 3622) of the first carcass layer (36), the second carcass layer (37) forming the reinforced layer, or
- axially on the inside of each axially inner portion (3611, 3621) of the first carcass layer (36), the first carcass layer (36) forming the reinforced layer, or
- axially on the outside of each axially outer portion (3612, 3622) of the first carcass layer (36), the second carcass layer (37) forming the reinforced layer.
